(19) **Europäisches Patentamt / European Patent Office / Office européen des brevets**

(11) **EP 3 398 290 B1**

(12) # FASCICULE DE BREVET EUROPEEN

(45) Date de publication et mention de la délivrance du brevet:
**18.09.2019 Bulletin 2019/38**

(21) Numéro de dépôt: **16831622.2**

(22) Date de dépôt: **29.12.2016**

(51) Int Cl.:
***H04L 9/08*** (2006.01)

(86) Numéro de dépôt international:
**PCT/EP2016/082874**

(87) Numéro de publication internationale:
**WO 2017/114920 (06.07.2017 Gazette 2017/27)**

(54) **PROCÉDÉ D'EXTRACTION UNIVALENTE ET UNIVOQUE DE CLÉS A PARTIR DU CANAL DE PROPAGATION**

VERFAHREN FÜR MONOVALENTE EINS-ZU-EINS-EXTRAKTION VON SCHLÜSSELN AUS DEM PROPAGATIONSKANAL

PROCESS FOR MONOVALENT ONE-TO-ONE EXTRACTION OF KEYS FROM THE PROPAGATION CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2015 FR 1502712**

(43) Date de publication de la demande:
**07.11.2018 Bulletin 2018/45**

(73) Titulaires:
- **Thales**
  **92400 Courbevoie (FR)**
- **Institut Mines-Télécom**
  **75013 Paris (FR)**
- **Celeno Communications Ltd.**
  **43665 Ra'anana (IL)**

(72) Inventeurs:
- **MOLIÈRE, Renaud**
  **92622 Gennevilliers Cedex (FR)**
- **KAMENI NGASSA, Christiane**
  **92622 Gennevilliers Cedex (FR)**
- **DELAVEAU, François**
  **92622 Gennevilliers Cedex (FR)**
- **LEMÉNAGER, Claude**
  **92622 Gennevilliers Cedex (FR)**
- **SIBILLE, Alain**
  **75634 Paris Cedex 13 (FR)**
- **MAZLOUM, Taghrid**
  **75634 Paris Cedex 13 (FR)**
- **SHAPIRA, Nir**
  **43665 Ra'anana (IL)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A2-2006/081122     US-A1- 2012 281 834**

- **MASOUD GHOREISHI MADISEH ET AL: "Applying Beamforming to Address Temporal Correlation in Wireless Channel Characterization-Based Secret Key Generation", IEEE TRANSACTIONS ON INFORMATION FORENSICS AND SECURITY, IEEE, PISCATAWAY, NJ, US, vol. 7, no. 4, 1 août 2012 (2012-08-01), pages 1278-1287, XP011450888, ISSN: 1556-6013, DOI: 10.1109/TIFS.2012.2195176**
- **MICHAEL A FORMAN ET AL: "The generation of shared cryptographic keys through full duplex channel impulse response estimation at 60 GHz", MICROWAVE CONFERENCE PROCEEDINGS (APMC), 2010 ASIA-PACIFIC, IEEE, 7 décembre 2010 (2010-12-07), pages 1292-1295, XP031928893, ISBN: 978-1-4244-7590-2**

**Description**

L'invention concerne un procédé d'Extraction univalente et univoque de clés à partir du Canal de Propagation. Ces clés, rendues secrètes en raison de l'univalence du procédé, sont destinées à être utilisées pour sécuriser l'échange de données entre au moins un premier utilisateur et au moins un deuxième utilisateur, dans un système d'échanges de données, notamment des systèmes de communications sans fil (terminaux portables, ordinateurs etc.).

Pour les échanges de données, notamment dans les systèmes de communications sans fil, il est préférable de sécuriser les informations transmises entre deux utilisateurs, afin d'éviter qu'un tiers mal intentionné accède à ces informations.

La plupart des systèmes de transmission sécurisés utilisent des clés secrètes prépartagées entre les émetteurs et les récepteurs, ce qui induit des mécanismes complexes (et souvent coûteux) de génération et de distribution desdites clés pour les partager entre les utilisateurs. De plus, lorsque cette génération et cette distribution doivent s'effectuer à grande échelle, comme par exemple dans les réseaux de radiocommunications publics, la multiplication des intervenants (fabricants, opérateurs, distributeurs, abonnés) et des circuits d'acheminement induisent de forts risques de fuite de données, comme plusieurs faits divers récents dans le domaine l'ont montré.

Certains dispositifs de génération de clés secrètes à partir du canal de propagation existent. Ces dispositifs utilisent l'indication de la force du signal reçu (RSSI). Technologiquement parlant, cette mesure de puissance est assez facile d'accès. Toutefois, le RSSI ne prend en compte qu'une faible partie de la richesse du canal de propagation, en ignorant les coefficients de phase de canal qui offrent beaucoup plus de caractère aléatoire que le seul paramètre de puissance du signal habituellement exploité. De ce fait, dans de fréquentes situations, la génération de clé par exploitation du RSSI n'est pas univalente car les clés générées présentent de fortes corrélations, ce qui permet à un tiers de les reconstituer. L'article "Applying Beamforming to Address Temporal Correlation in Wireless Channel Characterization-Based Secret Key Generation" par M. Madiseh et al., publié dans "IEEE transactions of Information Forensics and Security", vol. 7, no. 4, août 2012, expose un procédé de génération de clé mis en oeuvre par deux dispositifs de communication sans fil sur la base d'une analyse de la réponse impulsionnelle du canal.

L'article "The Generation of Shared Cryptographic Keys through Full Duplex Channel Impulse Response Estimation at 60 GHz" par M. Forman et D. Young, publié dans "Proceedings of Asia Microwave Conference 2010", expose un dispositif de communication sans fil générant une clé sur la base d'une analyse de la réponse impulsionnelle du canal.

Les documents de publication de demande de brevet US 2012/0281834 A1 par Reznik et al, et WO 2006/081122 A2 par Rudolf et al, exposent des techniques relevantes pour l'arrière-plan technologique dans lequel la présente invention se situe.

L'idée mise en oeuvre par le procédé selon l'invention est notamment de tirer pleinement partie du caractère fortement aléatoire des canaux de transmission sans fil, afin de générer de façon univalente et univoque une clé secrète permettant la protection des données échangées entre au moins un émetteur et un récepteur. Ladite univalence provenant du fait que seule une mesure du canal conduite de manière simultanée et colocalisée permettrait à un tiers non informé desdites mesures, de reproduire ces clés en appliquant les mêmes procédures de sélection, quantification et formatage; ladite univocité provient des mécanismes de formatage et de corrections appliqués dans le procédé selon l'invention.

Dans la suite de la description, on utilise indifféremment l'expression « utilisateur A » ou « émetteur récepteur A » pour désigner un utilisateur Alice et de même pour l'utilisateur Bob.

L'invention concerne un procédé d'Extraction univalente et univoque de clés à partir d'un canal de propagation (EUC_CP), lesdites clés étant destinées à protéger des données échangées entre un premier utilisateur et un deuxième utilisateur, un utilisateur comportant un ou plusieurs émetteurs et un ou plusieurs récepteurs, les données étant transmises par le canal de propagation, caractérisé en ce qu'il comporte au moins les étapes suivantes :

a) Mesurer par le ou les récepteurs du premier et du deuxième utilisateur, des signaux S provenant de chaque émetteur de l'autre utilisateur, mesurer les paramètres du canal de propagation correspondant, et estimer les réponses impulsionnelles complexes correspondantes du canal de propagation ou des réponses en fréquence complexes correspondantes du canal de propagation,

b) Sélectionner de manière univalente, pour chaque utilisateur, un ensemble de coefficients complexes de canal issus des estimations des réponses impulsionnelles complexes du canal de propagation ou des réponses en fréquence complexes du canal de propagation, et conserver les coefficients qui présentent une corrélation croisée inférieure à une valeur seuil prédéterminée réglable,

c) Quantifier et formater, pour chaque utilisateur, les coefficients complexes de canal sélectionnés, en appliquant un maillage géométrique du plan complexe dans lequel les coefficients de canal prennent leur valeur, une numérotation des coefficients complexes selon la maille à laquelle ils appartiennent, et en appliquant des techniques de correction d'erreur sur ladite numérotation,

d) Utiliser de manière univalente et univoque, pour chaque utilisateur, des données numériques issues de ladite quantification et dudit formatage sous forme de clés secrètes afin de crypter la suite des données transmises.

Le procédé utilise, par exemple, comme mode de communication entre les utilisateurs, un mode Duplex Temporel employant une même fréquence porteuse pour les échanges en émission et en réception dans les deux sens de transmission.

Le procédé peut être dupliqué sur l'ensemble des fréquences porteuses employées par des utilisateurs à mode Duplex fréquentiel employant des fréquences porteuses différentes pour leurs échanges en émission et en réception selon le sens de transmission.

Le procédé peut appliquer une fonction de codage correcteur d'erreur sur les clés extraites par les utilisateurs, avec une transmission minimale de données du premier utilisateur vers le second utilisateur, afin d'éliminer les différences entre les clés du premier et du second utilisateur.

Selon une variante de réalisation, le procédé met en oeuvre une fonction de hachage et une réduction de longueur sur les clés extraites, la fonction étant adaptée à éliminer toute fuite résiduelle d'informations vers un tiers et améliorer les qualités d'aléa des clés.

Les étapes du procédé selon l'invention peuvent être renouvelées d'une transmission à l'autre et être renouvelées régulièrement au cours d'une même transmission.

Le procédé peut utiliser un protocole de bruit et de formation de faisceau pour la transmission des données et les signaux sont, par exemple, des signaux émis et reçus dans le cadre dudit protocole de bruit artificiel et formation de faisceau.

Selon une variante de réalisation, les signaux sont des signaux émis et reçus dans le cadre d'un protocole à émission et réception simultanées (« Full Duplex » en anglais).

Selon une autre variante, les signaux sont des signaux de marquage, publics ou non, furtifs ou non, auto-interférés ou non, émis et reçus dans le cadre d'un protocole d'identification de systèmes d'émission réception ou dans le cadre d'un protocole d'authentification d'utilisateurs d'un tel système ou dans le cadre d'un protocole de contrôle d'intégrité des messages émis et reçus par un tel système.

Le procédé peut mettre en oeuvre des émetteurs et récepteurs adaptés à des radiocommunications. Il peut aussi utiliser des émetteurs et des récepteurs adaptés à des transmissions acoustiques ou encore à des transmissions optiques.

L'invention concerne aussi un dispositif permettant une Extraction univalente et univoque de clés à partir d'un canal de propagation (EUC_CP), lesdites clés étant destinées à protéger des données échangées entre un premier utilisateur et un deuxième utilisateur, un utilisateur comportant un ou plusieurs émetteurs et un ou plusieurs récepteurs, les données étant transmises par le canal de propagation, caractérisé en ce que chaque utilisateur comporte au moins une unité de calcul adaptée à exécuter les étapes du procédé selon l'invention.

Les émetteurs et les récepteurs sont, par exemple, des émetteurs/récepteurs de radiocommunications, ou des émetteurs et des récepteurs adaptés aux transmissions acoustiques ou encore des émetteurs et des récepteurs de transmissions optiques.

D'autres caractéristiques et avantages de la présente invention apparaîtront mieux à la lecture de la description donnée à titre illustratif et nullement limitatif, annexée des figures qui représentent :

- Figure 1, un schéma général d'échanges d'information entre deux utilisateurs A (Alice) et B (Bob) en présence d'un tiers étranger E (Eve) non autorisé à connaître le contenu des données échangées entre A et B,
- Figure 2, une illustration des effets d'un canal de propagation dispersif sur la transmission des signaux depuis un émetteur (A) vers un récepteur autorisé (B) et vers un récepteur non autorisé (E), et
- Figure 3, un schéma expliquant un algorithme de quantification du canal de propagation entre l'émetteur A et le récepteur B, après mesure de celui-ci par B selon des procédés bien connus de l'homme de l'art.

Afin de mieux faire comprendre le procédé selon l'invention, l'exemple est donné dans le cas d'un échange entre un premier utilisateur émetteur/récepteur A (Alice) et un deuxième utilisateur émetteur/récepteur B (Bob), en présence d'un récepteur tiers E (Eve) non autorisé, susceptible d'intercepter les communications et d'accéder au contenu des données échangées entre A et B.

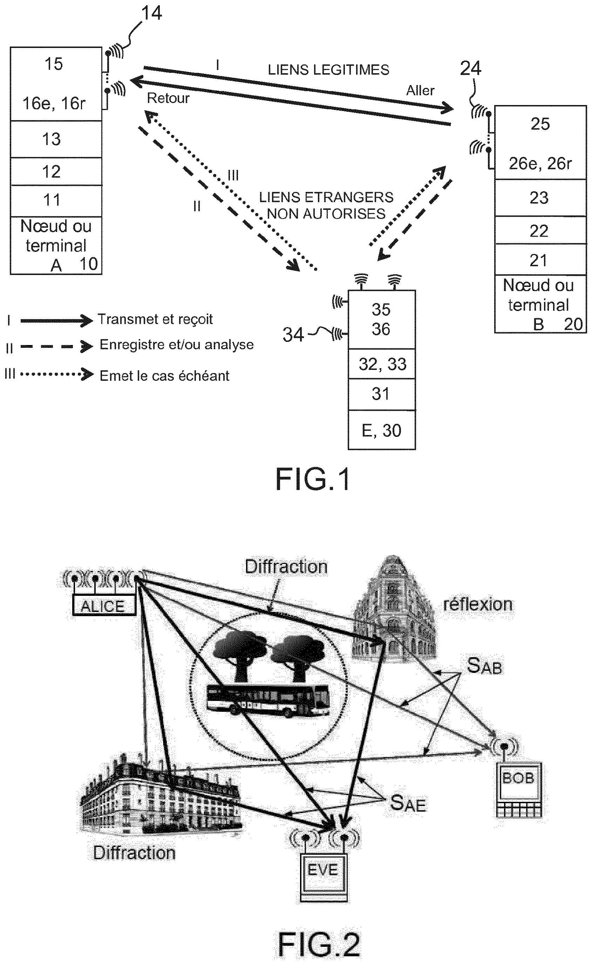

La figure 1 illustre un scénario de communication entre un premier utilisateur A, 10 et un deuxième utilisateur B, 20 en présence d'un récepteur tiers non autorisé E, 30.

L'utilisateur A est, par exemple, un noeud ou un terminal d'un réseau de communication comportant une unité de calcul 11, un module de codage/décodage 12, un module de démodulation 13, un module composé d'antennes 14, un ensemble de filtres 15, des moyens d'émission et réception radio 16e, 16r. Ces éléments sont connus de l'homme du métier et ne seront pas détaillés. L'objet de l'invention va consister notamment dans l'exécution d'un algorithme permettant le calcul d'une clé en exploitant les mesures effectuées sur les paramètres du canal comme il va être explicité ci-après.

De même, l'utilisateur B, 20, comporte, par exemple, une unité de calcul 21, un module de codage/décodage 22, un module de démodulation 23, un module composé d'antennes 24, de filtres 25, de moyens d'émission et réception radio 26e, 26r.

Le récepteur tiers non autorisé E, 30, comporte une unité de calcul 31, un enregistreur de données 32 et un module d'analyse 33, un bloc d'antennes 34 et de filtres 35 et de moyens de réception radio 36.

La figure 2 schématise un exemple de canaux de propagation existants dans un système de communication. Dans des environnements extérieurs ou intérieurs, les formes d'ondes transmises de l'émetteur A vers le récepteur B (flèche I fig.1) et vers le tiers E (flèche II fig.1) suivent des parcours multitrajets. Les signaux peuvent être réfléchis par des obstacles avec différents angles de réflexion. Une partie des signaux $S_{AB}$ peut être reçue par Bob, alors qu'une autre partie après diffraction $S_{AE}$, sera reçue sur le tiers non autorisé E. Du fait de la complexité dans la propagation des ondes et des diffractions peu prévisibles dans le canal de communication, le tiers E est a priori incapable de prédire ou de reconstituer les mesures du canal de propagation entre l'émetteur A et le récepteur B pour communiquer. C'est notamment cette caractéristique que le procédé selon l'invention va utiliser. Les canaux mesurés par Alice et par Bob et les coefficients qu'ils vont en extraire, après quantification et un formatage appropriés décrits dans la suite, caractérisent les liens « légitimes », autorisés et ne pourront être ni connus ni reconstruits par le tiers E.

Les émetteurs/récepteurs Alice A et Bob B souhaitant communiquer en toute sécurité, A et B veulent extraire une clé secrète commune $K_A$, à partir des paramètres du canal de propagation que chacun mesure. Par exemple, lorsque le tiers non autorisé Eve E est situé à une distance de quelques longueurs d'onde de B, les mesures de canal seront toujours indépendantes du canal légitime et de fait, la clé $K_E$ que E pourra extraire sera indépendante de la clé secrète $K_A$ extraite par A et B. Dans de nombreux cas, une distance de quelques longueurs d'ondes suffit pour assurer l'indépendance entre les clés $K_A$ et $K_E$.

Considérant des échanges entre utilisateurs A et B en mode Duplex temporel (émission et réception sur la même fréquence porteuse dans le sens A vers B et B vers A), l'invention exploite la réciprocité naturelle du canal de propagation (durant sa durée de stationnarité) dans la mesure où les angles d'incidences et les longueurs des trajets aller et retour sont les mêmes.

Considérant des échanges entre utilisateurs A et B en mode Duplex fréquentiel (émission et réception sur des fréquences porteuses différentes selon le sens A vers B ou B vers A), la mise en oeuvre de l'invention passe par la duplication sur chaque porteuse, des étapes du procédé décrites dans la suite pour tirer bénéfice de la réciprocité naturelle du canal de propagation sur chacune des porteuses.

L'objectif étant de générer une clé secrète pour protéger les échanges de données entre l'émetteur/récepteur A et l'émetteur/récepteur B, le procédé va mettre en oeuvre, par exemple, les étapes suivantes :

a) La première étape consiste à mesurer les signaux émis par chaque émetteur 16e d'un premier utilisateur A après réception des signaux sur chaque récepteur 26r du second utilisateur B, à estimer les paramètres des canaux de propagation correspondants, puis à calculer les réponses complexes (avec information d'amplitude et de phase) en fréquence ou en temps des canaux correspondants. Ces estimations sont réalisées par les récepteurs 26r de B sur les émetteurs 16e de A et par les récepteurs de A 16r sur les émetteurs 26e de B. Ils permettent d'obtenir les valeurs des paramètres des canaux de propagation, par exemple, les réponses impulsionnelles complexes et/ou des réponses en fréquence complexes desdits canaux de propagation;

b) Lors d'une deuxième étape, le procédé utilise un algorithme exécuté sur l'unité de calcul 11, 12, de chacun des utilisateurs A et B qui permet de sélectionner de façon univalente les coefficients complexes de canaux de propagation issus des estimations réalisées à l'étape a), en ne gardant que les coefficients présentant une faible corrélation croisée, inférieure à un seuil prédéterminé réglable $V_{CC}$. La clé secrète Ks extraite en fin de processus le sera alors avec un caractère aléatoire suffisant, même dans des environnements de propagation très stationnaires rencontrés, par exemple, lorsque les émetteurs et récepteurs sont de positions fixes et que les obstacles et réflecteurs intervenant dans les mécanismes de propagation sont eux aussi fixes;

c) Lors d'une troisième étape, appelée quantification et formatage, chaque utilisateur réalise une quantification des coefficients complexes de canaux sélectionnés, en appliquant un maillage géométrique du plan complexe, une numérotation des coefficients complexes du canal selon la maille à laquelle ils appartiennent et un formatage univoque des données quantifiées, pour en augmenter la fiabilité par des techniques de correction d'erreurs appliquées à ladite numérotation, par exemple l'emploi de deux plans de quantifications alternés, tel qu'introduit par Wallace. Ceci permet de minimiser, a priori, les différences entre les clés obtenues par les utilisateurs légitimes - clé $K_A$ obtenue par A sur les émissions de B et clé $K_B$ obtenue par B sur les émissions de A;

d) Lors d'une quatrième étape, optionnelle, appelée étape de réconciliation de l'information, le procédé élimine le désaccord restant entre la clé $K_A$ obtenue par A et la clé $K_B$ obtenue par B. Pour cela, on utilise, par exemple, des codes correcteurs d'erreurs et des échanges à faible dévoilement d'information selon la description qui va suivre, afin de corriger les erreurs de B sur la clé $K_A$ de A, dans le cas où $K_B$ serait différente de $K_A$ à l'issue des étapes précédentes. Alice A va par exemple transmettre sur le canal public un message qui ne dévoilera pas la valeur de la clé $K_A$, mais qui permettra à Bob B de retrouver la clé $K_A$ à partir de la clé $K_B$ qu'il a lui-même déterminée, considérée comme une approximation imparfaite de $K_A$. En raison de la forte décorrélation du canal de propagation entre A et E et entre B et E, la clé extraite du canal de propagation par E sur les émissions de A ou de B, $K_E$, sera trop différente des clés $K_A$ ou $K_B$ calculées par A et B pour permettre à E de retrouver $K_A$ ou $K_B$ ;

e) Une cinquième étape optionnelle, appelée amplification de la confidentialité, est mise en oeuvre en utilisant, par exemple, une fonction de hachage. Cette étape va permettre d'éliminer tout dévoilement résiduel d'information vers un tiers E non autorisé, et d'améliorer dans le même temps le caractère aléatoire de la clé secrète $K_A$. Cette étape permet de garantir que la clé secrète $K_S$ générée en sortie est indépendante de toute clé $K_E$ éventuellement calculée par le tiers non autorisé, même si E peut capter, décoder et interpréter convenablement toutes les informations échangées entre A et B.

Le code correcteur d'erreurs dans l'étape d) de réconciliation peut être un simple code algébrique, bien connu de l'homme de l'art et la fonction de hachage utilisée dans l'étape e) d'amplification de la confidentialité, une famille 2-universelle de fonctions de hachage, connue de l'homme de l'art.

Les étapes optionnelles d) et e) peuvent être omises lorsque les utilisateurs ont suffisamment de garanties sur la fiabilité et le secret des étapes a) b) et c), dans ce cas on a directement $K_S=K_A=K_B$.

Les étapes du procédé résumées ci-dessus vont maintenant être détaillées.

**Estimation du canal de propagation (étape a)**

La génération de clé secrète $K_S$ repose sur l'utilisation de l'information sur l'état du canal de propagation, connue sous l'expression anglo-saxonne « Channel State Information ». Cette information peut être mesurée dans le domaine fréquentiel (Channel Frequency Response (CFR) en anglais ou Channel Transfer Function (CTF)) notée $H_f$ dans la suite, ou dans le domaine temporel (Channel Impulse Response en anglais ou CIR), notée $H_t$ dans la suite.

Dans le domaine fréquentiel, l'estimation du canal $H_f$ quantifie l'évanouissement ou fading appliqué sur chaque sous-porteuse.

Dans un système où les signaux sont convenablement (i.e. selon les règles connues de l'homme du métier - respect du critère de Nyquist) filtrés et échantillonnés en bande de base à une période $T_{ech}$, en considérant une réponse de canal de largeur de bande finie, la $k^{ème}$ composante de la réponse CFR échantillonnée $\hat{H}_f(k)$ correspondant à la fréquence $f_k = k/T_{ech}$ est calculée selon la formule :

$$\hat{H}_f(k) = \frac{Y(f_k)}{X(f_k)}$$

où $Y(f_k)$ est le signal reçu dans le domaine fréquentiel à la fréquence $f_k$, $X(f_k)$ est le signal émis ou le signal de référence dans le domaine fréquentiel à la fréquence $f_k$.

Cette méthode est particulièrement bien adaptée pour des formes d'ondes multiporteuses utilisant une modulation de codage par répartition en fréquence orthogonale ou OFDM (Orthogonal Frequency Division Multiplexing), par exemple le WiFi, le LTE, le Bluetooth.

La réponse CFR échantillonnée $\hat{H}_f(k)$ peut aussi être obtenue par l'exploitation directe des sorties des traitements appliqués dans le domaine fréquentiel par les récepteurs de chaque utilisateur pour les besoins propres à la qualité de leur réception et démodulation des signaux émis par les autres utilisateurs : égalisation sur des sous-porteuses pilotes dans les noeuds, stations de base et terminaux employant des techniques d'accès radio aux modulations de type OFDM et des protocoles associés, par exemple de type O-FDMA (Orthogonal-Frequency Division Multiple Access) ou SC-FDMA (Single Carrier-Frequency Division Multiple Access) comme dans les réseaux de radiodiffusion à la norme DVB-T (Digital Video Broadcast-Terrestrial), ou les réseaux radiocellulaires de quatrième génération à la norme LTE (Long Term Evolution), ces techniques étant bien connues de l'homme de métier.

Dans le domaine temporel, l'estimation du canal $H_t$ quantifie la distribution des trajets de propagation au cours du temps dans la bande de la porteuse du signal. Dans l'exemple donné, en considérant une approximation finie de la réponse temporelle du canal, le $l^{ème}$ échantillon de la réponse CIR échantillonnée $H_t(l)$, correspondant à l'instant $t_l=l.T_{ech}$, la réponse CIR $H_t(l)$ échantillonnée est obtenue, par exemple, à partir de la réponse CFR échantillonnée en utilisant la transformation de Fourier rapide inverse comme suit :

$$H_t = \text{IFFT}(\hat{H}_f).$$

Elle peut aussi être obtenue directement dans le domaine temporel à partir de signaux de références $x_A(t+t_0)$ et $x_B(t+t_0)$ émis par les utilisateurs A et B, à partir d'un instant de référence $t_0$, et en appliquant, aux signaux $y_A(t+t_0)$ et $y_B(t+t_0)$ reçus par les récepteurs des utilisateurs A et B après propagation dans le canal de transmission dont on considère une approximation de longueur finie L, les étapes suivantes:

- un filtrage et un échantillonnage convenables (respect du critère de Nyquist connu de l'homme de métier) en bande de base à la période $T_{ech}$ produisant les signaux échantillonnés $y_A(I+I_0)$ et $y_B(I+I_0)$, les indices I et $I_0$ échant définis par t=I.$T_{ech}$ ; $t_0=I_0.T_{ech}$,
- utiliser un ou plusieurs procédés d'estimation de filtres à réponse finie (procédés connus de l'homme de métier), afin par exemple d'estimer les coefficients $H_t(l_1)$, $l_1 = 0,..., L - 1$ en minimisant une fonction non-linéaire qui traduit, sur une durée d'intégration de L échantillons, l'erreur quadratique d'estimation entre le signal échantillonné reçu y(I+$I_0$) et le signal échantillonné émis x(I+$I_0$) filtré par le canal de propagation échantillonné $H_t=\{H_t(l_1)_{l_1=0,...,L-1}\}$.

Une telle fonction est explicitée dans la formule suivante :

$$\{H_t(l_1)_{l_1=0,...,L-1}\}$$

$$= ArgMin_{\{h(l_1)_{l_1=0,...,L-1}\}} \left\{ \sum_{l=0}^{L'-1} \left\| y(l_0 + l) - \sum_{l_1=0}^{L-1} h(l_1) \, x(l_0 + l - l_1) \right\|^2 \right\}$$

La réponse CIR $H_t(l)$ échantillonnée peut aussi être obtenue par l'exploitation directe des sorties des traitements appliqués dans le domaine temporel par les récepteurs de chaque utilisateur, pour les besoins propres à la qualité de leur réception et démodulation des signaux émis par les autres utilisateurs :

- égalisation sur des séquences pilotes dans les noeuds, stations de base et terminaux employant des techniques d'accès radio aux protocoles TDMA (Time Division Multiple Access) comme dans les réseaux de deuxième génération à la norme GSM (Global System Mobile),
- réception radio RAKE dans les noeuds, stations de base et terminaux employant des techniques d'accès radio aux protocoles CDMA (Code Division Multiple Access) comme dans les réseaux de troisième génération à la norme UMTS (Universal Mobile Terrestrial System),
  ces techniques étant connues de l'homme du métier.

**Décorrélation de canal (étape b)**

Les clés secrètes $K_s$ générées doivent être de préférence totalement aléatoires pour être imprédictibles par le tiers non autorisé E. Pour cela, la deuxième étape du procédé (étape b) utilise un algorithme de sélection dans les domaines temporel et fréquentiel permettant de ne conserver que les coefficients de canaux décorrélés, c'est-à-dire présentant la capacité de générer des données numériques ou bits avec des distributions de probabilités égales et non corrélées.

Afin d'éliminer la corrélation temporelle et fréquentielle, le procédé peut, par exemple, mettre en oeuvre l'un ou l'autre des algorithmes décrits ci-après.

On peut utiliser un algorithme de diminution de la corrélation temporelle entre les coefficients de canaux. L'ensemble des coefficients de canaux mesurés à un même instant d'acquisition t constitue une trame temporelle. Les coefficients temporels de corrélation croisée $C_{cc,t}$ sont calculés entre deux trames consécutives $R_i$, $R_{i+1}$ par des algorithmes connus de l'homme de métier. Le procédé sélectionne les trames pour lesquelles le coefficient de corrélation croisée $C_{cc,t}$ est inférieur à une valeur seuil $T_t$.

Il est aussi possible d'utiliser un algorithme de diminution de la corrélation fréquentielle entre les coefficients du canal. Le procédé est explicité ci-dessous, à titre illustratif et non limitatif, pour un signal de modulation par sous-porteuse de type OFDM (Orthogonal Frequency Division Multiplexing). Pour un tel signal, les coefficients fréquentiels de corrélation croisés $C_{cc,f}$ sont calculés entre deux fréquences porteuses consécutives $P_j$, $P_{j+1}$ par des algorithmes connus de l'homme de métier. Le procédé sélectionne les porteuses pour lesquelles le coefficient de corrélation croisée $C_{cc,f}$ est inférieur à une valeur seuil $T_f$. De plus, les sous-porteuses de plus basse fréquence et de plus haute fréquence sont éliminées. Le procédé s'appliquerait de même aux composantes spectrales complexes d'un signal général, aux sorties d'une transformation de Fourier dudit signal conduite selon les règles de l'art.

Finalement, Alice va transmettre à Bob les indices temporels t et fréquentiels f des coefficients de canaux sélectionnés, en empruntant le canal public de transmission. Seuls les indices de ces coefficients sont transmis, ce qui n'induit aucune divulgation d'information sur la valeur de ces coefficients vers un tiers non autorisé E.

Un deuxième algorithme de décorrélation des mesures du canal procède par concaténation des deux algorithmes ci-dessus, comme suit : premièrement sont présélectionnées les trames temporelles $C_{cc,t}$ pour lesquelles les coefficients de corrélation croisée avec toutes les autres trames sont tous inférieurs à un seuil fixé $\boldsymbol{T_t}$. Ensuite, pour les trames temporelles issues de la pré-sélection ci-dessus, on sélectionne les fréquences porteuses pour lesquelles les coefficients de corrélation croisée $C_{cc,f}$ sont tous inférieurs à un seuil fixé $\boldsymbol{T_f}$.

**Quantification (étape c)**

Prenant comme hypothèse que le canal de propagation est réciproque et aléatoire, il peut être considéré comme une source commune de bits aléatoires $b_i$ entre un couple de terminaux légitimes où i est un indice entier. Ainsi, après avoir mesuré le canal radio, l'émetteur 16e de A et le récepteur 26r de B utilisent conjointement un algorithme de quantification pour générer une séquence de bits $b_1,...b_N$, destinés à produire une clé secrète à partir du canal commun à A et B. Toutefois, du fait de la présence de bruit et des erreurs d'estimation du canal de propagation, l'émetteur 16e de A et le récepteur 26r de B peuvent être en désaccord sur quelques bits de la clé secrète générée, c'est-à-dire que les clés $K_A$ et $K_B$ ne coïncident pas en totalité. Pour limiter ce phénomène, le procédé va exécuter un algorithme de quantification adapté.

Un exemple classique d'algorithme de quantification consiste à mailler le plan complexe (appelé alors plan de quantification) dans lequel les coefficients de canaux prennent leurs valeurs. Classiquement, l'axe réel et l'axe imaginaire du plan complexe sont cloisonnés en intervalles, avec des bandes de garde entre ces intervalles. L'algorithme de quantification attribue à un coefficient complexe de canal les numéros des intervalles dans lesquels se trouvent sa partie réelle et sa partie imaginaire, mais il rejette tous les parties réelles ou imaginaires de coefficients complexes qui se situent à l'extérieur d'un intervalle, c'est-à-dire dans l'une des bandes de garde, ce qui conduit ainsi à une exploitation inefficace des mesures de canal et à un nombre réduit de données numériques ou bits extraits.

D'autres schémas utilisent des plans de quantification multiples, où chaque plan est adapté à la trame courante des coefficients de canaux, tel que l'algorithme de quantification de canal CQA décrit dans le document de J. Wallace and R. Sharma, "Automatic secret keys from reciprocal MIMO Wireless channels: measurement and analysis," IEEE Trans. on Info. Foren. and Sec., vol. 5, no. 3, pp. 381-392, Sep 2010. Le principe mis en oeuvre consiste à choisir le plan de quantification le moins sensible au désaccord de la trame courante des coefficients de canaux.

Le procédé selon l'invention va, par exemple, appliquer un algorithme CQA aux coefficients de canaux pour générer les bits de la clé secrète.

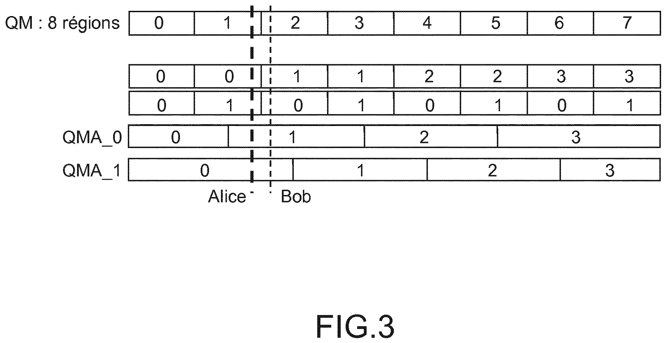

Un exemple illustratif et non limitatif est donné à la figure 3 qui illustre le principe de l'algorithme CQA. Cet algorithme utilise deux plans alternés pour générer les bits de la clé secrète. La figure 3 illustre l'application de l'algorithme CQA en ne considérant qu'un seul axe pour simplifier, par exemple l'axe réel et les parties réelles des coefficients complexes de canaux.

La fonction de répartition des parties réelles et imaginaires des coefficients complexes de canal est utilisée pour diviser l'espace de mesures en régions équiprobables. L'ensemble de ces régions constituent alors un premier plan de quantification P0. Un second plan de quantification P1 est obtenu après translation du premier, selon un schéma décrit dans le document de J. Wallace and R. Sharma, précité. Ainsi, pour chaque observation, l'émetteur de A choisit le plan de quantification pour lequel la mesure est la plus éloignée d'une frontière, de manière à minimiser le risque d'erreur après quantification. Puis, l'émetteur de A transmet au récepteur de B un message $M_A$ sur le canal public indiquant quel est le plan de quantification utilisé pour chaque mesure de canal. Ce message ne révèle que l'indice du plan de quantification utilisé et aucune information sur la valeur des coefficients du canal.

Dans l'exemple donné figure 3, l'espace total des mesures de canal observables est divisé en huit régions QM numérotées M=0 à M=7. Lorsque cette division en huit régions est appliquée directement, les erreurs de bruit et d'estimation peuvent engendrer des « désaccords » fréquents entre les mesures de canal de l'émetteur de A et du récepteur de B au voisinage des frontières entre régions.

Sur la figure illustrative 3, deux plans alternés P0 et P1 de quatre régions sont déduits de la carte originale en 8 régions QM, M= 1,...,7. Pour chaque coefficient de canal, Alice choisit le plan de quantification P0 ou P1 pour lequel le coefficient de canal est le plus loin d'une frontière, réduisant ainsi la probabilité de désaccord.

Par exemple sur la figure 3, Alice choisit le plan P1 pour quantifier le coefficient de canal et obtenir comme bit de clé zéro. Alice transmet ensuite à Bob l'indice 1 du plan P1 sélectionné. A partir de cet identifiant, Bob génère aussi le zéro comme bit de clé en utilisant la mesure de canal. Au final, dans cet exemple, en dépit d'une erreur possible entre les mesures de canal de A et de B en raison des bruits de réception et mesure, A et B vont générer la même clé secrète.

**Etape de réconciliation (étape d)**

Lors de l'étape de réconciliation, le procédé va supprimer les désaccords restants entre la clé générée par A, $K_A$, et la clé générée par B, $K_B$, en utilisant un code correcteur d'erreur. La clé calculée par A, $K_A$, est considérée comme la clé secrète et B veut retrouver la clé de A, $K_A$, en corrigeant la clé $K_B$ extraite de ses propres mesures de canal.

L'étape de réconciliation comprend, par exemple, les étapes suivantes :

Au niveau de A :

- Sélection d'un mot aléatoire $c$ appartenant à un code correcteur d'erreur $\mathcal{C}$ ,
- Calcul du message $s = K_A \oplus c$ appelé secure sketch, terme connu de l'homme du métier, $\oplus$ désigne l'addution modulo 2,
- Transmission du secure sketch $s$ à Bob en utilisant le canal de communication public,

Au niveau de B :

- Utilisation du secure sketch $s$ afin de calculer le mot $c_B$ appartenant au code correcteur $\mathcal{C}$ et correspondant à la clé de B, $K_B$ : $c_B = K_B \oplus s$, $c_B$ représente ainsi une approximation imparfaite du mot aléatoire $c$ sélectionné par A,
- Décodage de $c_B$ pour corriger les erreurs et retrouver le mot de code $c$ sélectionné par A. B obtient alors $\hat{c}$, une estimation de $c$,
- Récupération de $K_A$ à partir du mot de code décodé $\hat{c}$ et du secure sketch $s$ : $\hat{K}_A = \hat{c} \oplus s$.

L'étape de réconciliation est réussie lorsque B parvient à décoder parfaitement le mot de code $c$ sélectionné par Alice, c'est-à-dire lorsque $\hat{c} = c$. Ainsi, B retrouve la valeur exacte de la clé de A : $\hat{K}_A = K_A$.

Par conséquent, bien que transmis sur le canal public, le secure sketch permet la récupération exacte de la clé secrète $K_A$ sans dévoiler sa valeur exacte.

Cependant, E peut aussi utiliser le secure sketch afin de se rapprocher de la clé secrète $K_A$. Il est alors nécessaire de supprimer l'information rendue vulnérable par l'envoi du secure sketch sur le canal public.

Une dernière étape permet de supprimer cette fuite d'information et d'améliorer la qualité de la clé secrète.

## Etape d'amplification de la confidentialité (étape e)

Comme il a été mentionné précédemment, l'objectif de cette dernière étape est de supprimer l'information qui a pu fuir vers le tiers E au cours de l'étape de réconciliation et d'améliorer le caractère aléatoire de la clé. Pour obtenir ce résultat, il est possible d'utiliser des fonctions de hachage.

L'exemple suivant est donné pour une famille « 2-universelle » de fonctions de hachage.

Une famille $\mathcal{G}$ de fonctions $\mathcal{A} \to \mathcal{B}$ est dite 2-universelle si pour x1 $\neq$ x2 :

$$\Pr[g(x_1) = g(x_2)] \leq \frac{1}{|\mathcal{B}|}$$

où g est choisi de manière aléatoire dans $\mathcal{G}$

Une manière de construire une famille 2-universelle est de sélectionner un élément aléatoire $a \in GF(2^n)$ et d'interpréter la clé secrète $K_A$ comme un élément de $GF(2^n)$.

La fonction $\{0,1\}^n \to \{0,1\}^r$ assignant à $K_A$ les $r$ premiers bits du produit $a. K_A \in GF(2^n)$ est une famille 2-universelle de fonctions de hachage pour $1 \leq r \leq n$.

A noter que $a. K_A$ est un produit défini dans le corps de Galois $GF(2^n)$.

Les étapes du procédé détaillées précédemment peuvent être renouvelées d'une transmission de données à une autre transmission et/ou régulièrement au sein d'une même transmission. Le procédé recalcule le code secret à chaque nouvelle transmission et à chaque nouveau message en fonction du contrôle de puissance et des fluctuations de propagation et des adaptations de débit éventuelles.

Le procédé peut être mis en oeuvre au sein d'un système de transmission utilisant un protocole de bruit et de formation de faisceau pour la transmission des données, les signaux étant alors des signaux émis et reçus dans le cadre dudit protocole de bruit artificiel et formation de faisceau.

Les signaux peuvent aussi être des signaux émis et reçus dans le cadre d'un protocole à émission et réception simultanées.

Selon une autre variante de réalisation, les signaux utilisés pour l'extraction de clés sont des signaux de marquage, publics ou non, furtifs ou non, auto-interférés ou non, émis et reçus dans le cadre d'un protocole d'identification de systèmes d'émission réception ou dans le cadre d'un protocole d'authentification d'utilisateurs d'un tel système ou dans le cadre d'un protocole de contrôle d'intégrité des messages émis et reçus par un tel système.

Les émetteurs et les récepteurs du dispositif seront choisis par exemple parmi la liste suivante : des émetteurs et récepteurs adaptés à des radiocommunications, des émetteurs et récepteurs adaptés à des transmissions acoustiques, des émetteurs et récepteurs adaptés à des transmissions optiques.

Avantageusement le procédé selon l'invention permet d'extraire une clé secrète de manière univalente et univoque, permettant ainsi la protection des données échangées entre des utilisateurs.

## Revendications

1. Procédé d'Extraction univalente et univoque de clés à partir d'un canal de propagation (EUC_CP), lesdites clés étant destinées à protéger des données échangées entre un premier utilisateur A et un deuxième utilisateur B, un utilisateur comportant un ou plusieurs émetteurs (16e, 26e) et un ou plusieurs récepteurs (26e, 26r), les données étant transmises par le canal de propagation, comportant au moins les étapes suivantes :

   a) Mesurer par le ou les récepteurs (16r, 26r) du premier et du deuxième utilisateur A, B, des signaux S provenant de chaque émetteur (16e, 26e) de l'autre utilisateur, mesurer les paramètres du canal de propagation correspondant, puis estimer les réponses impulsionnelles complexes correspondantes du canal de propagation ou des réponses en fréquences complexes correspondantes du canal de propagation,

   b) Sélectionner de manière univalente, pour chaque utilisateur A, B, un ensemble de coefficients complexes de canal issus des estimations des réponses impulsionnelles complexes du canal de propagation ou des réponses en fréquence complexes du canal de propagation, et conserver les coefficients qui présentent une corrélation croisée inférieure à une valeur seuil prédéterminée réglable,

   c) Quantifier et formater, pour chaque utilisateur, les coefficients complexes de canal sélectionnés, en appliquant un maillage géométrique du plan complexe dans lequel les coefficients de canal prennent leur valeur, une numérotation des coefficients complexes selon la maille à laquelle ils appartiennent, et des techniques de correction d'erreurs sur ladite numérotation,

   d) Utiliser de manière univalente et univoque, pour chaque utilisateur, des données numériques issues de ladite quantification et dudit formatage sous forme de clés secrètes afin de crypter la suite des données transmises.

2. Procédé selon la revendication 1 **caractérisé en ce qu'**il utilise un mode de communication entre utilisateurs, un mode Duplex Temporel employant une même fréquence porteuse pour les échanges en émission et en réception dans les deux sens de transmission.

3. Procédé selon la revendication 1 **caractérisé en ce qu'**il est dupliqué sur l'ensemble des fréquences porteuses employées par des utilisateurs à mode Duplex Fréquentiel employant des fréquences porteuses différentes pour leurs échanges en émission et en réception selon le sens de transmission.

4. Procédé selon l'une des revendications 1 à 3 **caractérisé en ce qu'**il applique une fonction de codage correcteur d'erreur sur les clés extraites $K_A$, $K_B$ par les utilisateurs A, B, avec une transmission minimale de données du premier utilisateur vers le second, afin d'éliminer les différences entre les clés du premier et du second utilisateur.

5. Procédé selon l'une des revendications 1 à 4 **caractérisé en ce qu'**il utilise une fonction de hachage et une réduction de longueur sur les clés extraites adaptées à éliminer toute fuite résiduelle d'informations vers un tiers et améliorer les qualités d'aléa des clés.

6. Procédé selon l'une des revendications précédentes **caractérisé en ce que** l'on renouvelle les étapes d'une transmission de données à une autre et régulièrement au sein d'une même transmission.

7. Procédé selon l'une des revendications précédentes **caractérisé en ce que** l'on utilise un protocole de bruit et de formation de faisceau pour la transmission des données et **en ce que** les signaux sont des signaux émis et reçus dans le cadre dudit protocole de bruit artificiel et formation de faisceau.

8. Procédé selon l'une des revendications précédentes **caractérisé en ce que** les signaux sont des signaux émis et reçus dans le cadre d'un protocole à émission et réception simultané.

9. Procédé selon l'une des revendications précédentes **caractérisé en ce que** les signaux sont des signaux de marquage, publics ou non, furtifs ou non, auto-interférés ou non, émis et reçus dans le cadre d'un protocole d'identification de systèmes d'émission réception ou dans le cadre d'un protocole d'authentification d'utilisateurs d'un tel système ou dans le cadre d'un protocole de contrôle d'intégrité des messages émis et reçus par un tel système.

10. Procédé selon l'une des revendications précédentes **caractérisé en ce qu'**il utilise des émetteurs et récepteurs adaptés à des radiocommunications.

11. Procédé selon l'une des revendications précédentes **caractérisé en ce que** les émetteurs et récepteurs sont adaptés à des transmissions acoustiques.

12. Procédé selon l'une des revendications précédentes **caractérisé en ce que** les émetteurs et récepteurs sont adaptés à des transmissions optiques.

13. Dispositif permettant une Extraction univalente et univoque de clés à partir d'un canal de propagation (EUC_CP) et comprenant une unité de calcul, lesdites clés étant destinées à protéger des données échangées entre un premier utilisateur et un deuxième utilisateur, un utilisateur A, B comportant un ou plusieurs émetteurs (16e, 26e) et un ou plusieurs récepteurs (16r, 26r), les données étant transmises par le canal de propagation, dans lequel chaque utilisateur comporte au moins une dite unité de calcul adaptée à exécuter les étapes du procédé selon l'une des revendications 1 à 12.

14. Dispositif selon la revendication 13 **caractérisé en ce que** les émetteurs et les récepteurs sont des émetteurs/récepteurs de radiocommunications.

15. Dispositif selon la revendication 13 **caractérisé en ce que** les émetteurs et les récepteurs sont des émetteurs/récepteurs de transmissions acoustiques.

16. Dispositif selon la revendication 13 **caractérisé en ce que** les émetteurs et les récepteurs sont des émetteurs et récepteurs de transmissions optiques.

**Patentansprüche**

1. Verfahren zur eindeutigen Eins-Zu-Eins-Extraktion von Schlüsseln aus einem Propagationskanal (EUC_CP), wobei die Schlüssel zum Schutz der zwischen einem ersten Nutzer A und einem zweiten Nutzer B ausgetauschten Daten bestimmt sind, wobei ein Nutzer mindestens einen Sender (16e, 26e) und mindestens einen Empfänger (26e. 26r) umfasst, wobei die Daten über den Propagationskanal übertragen werden, wobei das Verfahren mindestens folgende Schritte umfasst:

a) Messen der Signale S, die von jedem Empfänger (16e, 26e) des jeweils anderen Nutzers herrühren, durch den mindestens einen Empfänger (16r, 26r) des ersten und zweiten Nutzers A, B, Messen der Parameter des entsprechenden Propagationskanals, gefolgt durch Abschätzen der entsprechenden komplexen Impulsantworten des Propagationskanals oder der entsprechenden Antworten des Propagationskanals in komplexen Frequenzen,
b) eindeutiges Auswählen einer Reihe von komplexen Kanalkoeffizienten, die aus den Abschätzungen der komplexen Impulsantworten des Propagationskanals bzw. der Antworten in komplexen Frequenzen des Propagationskanals resultieren, für jeden Nutzer A, B, und Behalten der Koeffizienten, die eine Kreuzkorrelation aufweisen, die einen vorgegebenen anpassbaren Schwellenwert unterschreiten,
c) Für jeden Nutzer: Quantifizieren und Formattieren der ausgewählten komplexen Kanalkoeffizienten unter Anwendung eines geometrischen Geflechts der komplexen Ebene, in der die Kanalkoeffizienten ihren Wert annehmen, einer Nummerierung der komplexen Koeffizienten gemäß dem Geflecht, zu dem sie gehören, und von Fehlerkorrekturmethoden auf die Nummerierung,
d) für jeden Nutzer: eindeutiges Verwenden der aus der Quantifizierung und Formatierung resultierenden digitalen Daten in Form von Geheimschlüsseln, um die Reihe der übertragenen Daten zu verschlüsseln.

2. Verfahren nach Anspruch 1, **dadurch gekennzeichnet, dass** es einen Kommunikationsmodus zwischen Nutzern, einen Zeitduplexmodus, der eine einzige Trägerfrequenz für die ein- und ausgehenden Datenaustausche in beiden Übertragungsrichtungen benutzt, verwendet.

3. Verfahren nach Anspruch 1, **dadurch gekennzeichnet, dass** es auf allen Trägerfrequenzen dupliziert wird, die von den Nutzern im Frequenzduplexbetrieb, die je nach Übertragungsrichtung für ihre ein- und ausgehenden Austausche unterschiedliche Trägerfrequenzen verwenden.

4. Verfahren nach einem der Ansprüche 1 bis 3, **dadurch gekennzeichnet, dass** es eine Fehlerkorrektur-Codierfunktion auf die von den Nutzern A, B extrahierten Schlüssel $K_A$, $K_B$ mit einer minimalen Übertragung von Daten vom ersten Nutzer an den zweiten anwendet, um die Unterschiede zwischen den Schlüsseln des ersten und zweiten Nutzers zu beseitigen.

5. Verfahren nach einem der Ansprüche 1 bis 4, **dadurch gekennzeichnet, dass** es auf die extrahierten Schlüssel eine Hashfunktion und eine Längenreduzierung anwendet, die dazu geeignet sind, jeden verbleibenden Informationsverlust an einen Dritten zu verhindern und die willkürlichen Eigenschaften der Schlüssel zu verbessern.

6. Verfahren nach einem der vorstehenden Ansprüche, **dadurch gekennzeichnet, dass** die Schritte von einer Datenübertragung zur anderen sowie regelmäßig innerhalb einer einzelnen Übertragung wiederholt werden.

7. Verfahren nach einem der vorstehenden Ansprüche, **dadurch gekennzeichnet, dass** man ein Lärm- und Strahlbildungsprotokoll zur Übertragung der Daten verwendet und dass es sich bei den Signalen um Signale handelt, die im Rahmen dieses Lärm- und Strahlbildungsprotokolls gesendet und empfangen werden.

8. Verfahren nach einem der vorstehenden Ansprüche, **dadurch gekennzeichnet, dass** es sich bei den Signalen um Signale handelt, die im Rahmen eines Protokolls zum gleichzeitigen Senden und Empfangen gesendet und empfangen werden.

9. Verfahren nach einem der vorstehenden Ansprüche, **dadurch gekennzeichnet, dass** es sich bei den Signalen um öffentliche oder nicht öffentliche, flüchtige oder nicht flüchtige Markersignale mit oder ohne Eigeninterferenz handelt, die im Rahmen eines Erkennungsprotokolls für Sendeempfängersysteme oder im Rahmen eines Authentifizierungsprotokolls für die Nutzer eines derartigen Systems oder im Rahmen eines Protokolls zur Integritätskontrolle der durch ein derartiges System gesendeten und empfangenen Nachrichten gesendet und empfangen werden.

10. Verfahren nach einem der vorstehenden Ansprüche, **dadurch gekennzeichnet, dass** es Sender und Empfänger verwendet, die für die Funkkommunikation geeignet sind.

11. Verfahren nach einem der vorstehenden Ansprüche, **dadurch gekennzeichnet, dass** es Sender und Empfänger verwendet, die für die Schallübertragung geeignet sind.

12. Verfahren nach einem der vorstehenden Ansprüche, **dadurch gekennzeichnet, dass** die Sender und Empfänger für die optische Transmission geeignet sind.

13. Vorrichtung, die eine eindeutige Eins-Zu-Eins-Extraktion von Schlüsseln aus einem Propagationskanal (EUC_CP) ermöglicht und eine Recheneinheit umfasst, wobei die Schlüssel zum Schutz der zwischen einem ersten Nutzer A und einem zweiten Nutzer B ausgetauschten Daten bestimmt sind, wobei ein Nutzer A, B mindestens einen Sender (16e, 26e) und mindestens einen Empfänger (26e, 26r) umfasst, wobei die Daten über den Propagationskanal übertragen werden, wobei jeder Nutzer mindestens eine derartige Recheneinheit umfasst, die dazu geeignet ist, das Verfahren nach einem der Ansprüche 1 bis 12 auszuführen.

14. Vorrichtung nach Anspruch 13, **dadurch gekennzeichnet, dass** die Sender und Empfänger Funksender/-empfänger sind.

15. Vorrichtung nach Anspruch 13, **dadurch gekennzeichnet, dass** die Sender und Empfänger Schallsender/-empfänger sind.

16. Vorrichtung nach Anspruch 13, **dadurch gekennzeichnet, dass** die Sender und Empfänger optische Sender/Empfänger sind.

**Claims**

1. A method for univalent and unequivocal extraction of keys from a propagation channel (EUC_CP), said keys being intended to protect data exchanged between a first user A and a second user B, a user comprising one or more emitters (16e, 26e) and one or more receivers (26e, 26r), the data being transmitted via the propagation channel, **characterized in that** it comprises at least the following steps:

a) measuring, by the receiver or receivers (16r, 26r) of the first and of the second user A, B, signals S coming from each emitter (16e, 26e) of the other user, measuring the parameters of the corresponding propagation channel, and then estimating the corresponding complex impulse responses of the propagation channel or corresponding complex frequency responses of the propagation channel,

b) selecting, in a univalent manner, for each user A, B, a set of complex channel coefficients resulting from the estimations of the complex impulse responses of the propagation channel or of the complex frequency responses of the propagation channel, and retaining the coefficients that exhibit a cross-correlation lower than an adjustable predetermined threshold value,

c) quantifying and formatting, for each user, the selected complex channel coefficients by applying a geometrical mesh of the complex plane in which the channel coefficients take their value, numbering the complex coefficients according to the mesh to which they belong, and error correction techniques to said numbering,

d) using, in a univalent and unequivocal manner, for each user, digital data resulting from said quantification and from said formatting in the form of secret keys so as to encrypt the string of transmitted data.

2. The method as claimed in claim 1, **characterized in that** it uses a communication mode between users, a temporal duplex mode employing the same carrier frequency for the emission and reception exchanges in both transmission directions.

3. The method as claimed in claim 1, **characterized in that** it is duplicated over all of the carrier frequencies employed by users in frequency duplex mode employing different carrier frequencies for their emission and reception exchanges according to the transmission direction.

4. The method as claimed in one of claims 1 to 3, **characterized in that** it applies an error correction coding function to the keys $K_A$, $K_B$ that are extracted by the users A, B, with minimal transmission of data from the first user to the second, in order to eliminate the differences between the keys of the first and of the second user.

5. The method as claimed in one of claims 1 to 4, **characterized in that** it uses a hash function and a length reduction on the extracted keys that are designed to eliminate any residual leakage of information to a third party and improve the random qualities of the keys.

6. The method as claimed in one of the preceding claims, **characterized in that** the steps are repeated from one data transmission to another and regularly within the same transmission.

7. The method as claimed in one of the preceding claims, **characterized in that** use is made of a noise and beamforming protocol for the transmission of the data, and **in that** the signals are signals that are emitted and received within the framework of said artificial noise and beamforming protocol.

8. The method as claimed in one of the preceding claims, **characterized in that** the signals are signals that are emitted and received within the framework of a simultaneous emission and reception protocol.

9. The method as claimed in one of the preceding claims, **characterized in that** the signals are public or non-public, covert or non-covert, self-interfering or non-self-interfering marking signals that are emitted and received within the framework of a transceiver system identification protocol or within the framework of a user authentication protocol for such a system or within the framework of a protocol for verifying the integrity of the messages emitted and received by such a system.

10. The method as claimed in one of the preceding claims, **characterized in that** it uses emitters and receivers configured for radio communication.

11. The method as claimed in one of the preceding claims, **characterized in that** the emitters and receivers are configured for acoustic transmissions.

12. The method as claimed in one of the preceding claims, **characterized in that** the emitters and receivers are configured for optical transmissions.

**13.** A device for univalent and unequivocal extraction of keys from a propagation channel (EUC_CP) and comprising a calculating unit, said keys being intended to protect data exchanged between a first user and a second user, a user A, B comprising one or more emitters (16e, 26e) and one or more receivers (16r, 26r), the data being transmitted via the propagation channel, wherein each user includes at least one said calculating unit configured for executing the steps of the method as claimed in one of claims 1 to 12.

**14.** The device as claimed in claim 13, **characterized in that** the emitters and the receivers are radio communication transceivers.

**15.** The device as claimed in claim 13, **characterized in that** the emitters and the receivers are acoustic transmission transceivers.

**16.** The device as claimed in claim 13, **characterized in that** the emitters and the receivers are optical transmission transceivers.

## FIG.1

14

15

16e, 16r

13

12

11

Nœud ou
terminal
A    10

I    LIENS LEGITIMES

24

Aller

Retour

25

26e, 26r

23

22

21

Nœud ou
terminal
B    20

III

II

LIENS ETRANGERS
NON AUTORISES

I ——————▶ Transmet et reçoit

II ------▶ Enregistre et/ou analyse

III ·········▶ Emet le cas échéant

34

35
36

32, 33

31

E, 30

## FIG.1

Diffraction

réflexion

ALICE

S_AB

S_AE

BOB

Diffraction

EVE

## FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120281834 A1, Reznik

- WO 2006081122 A2, Rudolf

**Littérature non-brevet citée dans la description**

- **M. MADISEH et al.** Applying Beamforming to Address Temporal Correlation in Wireless Channel Characterization-Based Secret Key Generation. *IEEE transactions of Information Forensics and Security,* Août 2012, vol. 7 (4

- **M. FORMAN ; D. YOUNG.** The Generation of Shared Cryptographic Keys through Full Duplex Channel Impulse Response Estimation at 60 GHz. *Proceedings of Asia Microwave Conference 2010,* 2010
- **J. WALLACE ; R. SHARMA.** Automatic secret keys from reciprocal MIMO Wireless channels: measurement and analysis. *IEEE Trans. on Info. Foren. and Sec.,* Septembre 2010, vol. 5 (3), 381-392